# EUROPÄISCHE PATENTANMELDUNG

(11) **EP 2 662 253 A1**
(43) Veröffentlichungstag der Anmeldung: **13.11.2013**
(21) Anmeldenummer: 12187423.4
(22) Anmeldetag: 05.10.2012
(51) Int. Cl.: B60T 17/08, B60G 15/06

(54) **Druckluftbehälter zur Verwendung in einem Federbein**

(30) Priorität: 08.05.2012 EP 12167106
(71) Anmelder: B & S Interinvest Holding SA, 2530 Luxemburg (LU)
(72) Erfinder: Dering, Ralf, 44627 Herne (DE)
(74) Vertreter: von Kreisler Selting Werner

(57) **Zusammenfassung**

Druckluftbehälter (10) zur Verwendung in einem Federbein (12) eines Luftfederungssystems eines Fahrzeugs, wobei der Druckluftbehälter (10) zur fluiddichten Aufnahme komprimierter Luft ausgebildet ist, dadurch gekennzeichnet, dass der Druckluftbehälter (10) aus faserverstärktem Kunststoff ausgebildet ist.

## Beschreibung

Die Erfindung betrifft einen Druckluftbehälter zur Verwendung in einem Federbein eines Luftfederungssystems eines Fahrzeugs.

Bei Luftfederungssystemen übernimmt komprimierbare Luft die Funktion einer Stahlfeder bei einer konventionellen Stahlfederung. Hierzu ist es notwendig, die komprimierte Luft fluiddicht in einem Druckluftbehälter einzuschließen. Der Druckluftbehälter ist am oberen Ende des Federbeins eines Fahrzeugs angeordnet und mit diesem mechanisch verbunden. Hierzu kann der Druckluftbehälter bspw. an seinem oberen Ende eine Aufnahmevorrichtung zur Aufnahme des oberen Endes des Federbeins aufweisen. An seinem unteren Ende kann ein aus dem Stand der Technik bekannter Druckluftbehälter ferner eine Manschette aufweisen, durch die sein Innenvolumen fluiddicht von der Umgebung getrennt wird, sodass die im Druckluftbehälter befindliche komprimierte Luft nicht aus diesem entweicht und somit ihre Federwirkung entfalten kann.

Druckluftbehälter für Luftfederungssysteme müssen sehr großen mechanischen Kräften und Momenten standhalten. Es ist somit notwendig, diese Druckluftbehälter aus Metall auszubilden. Im oberen Bereich des Druckluftbehälters, in dem dieser das obere Ende des Federbeins aufnimmt und in dem ferner der Druckluftbehälter und das Federbein mit dem Federbeinlager der Fahrzeugkarosserie verbunden sind, treten die höchsten mechanischen Belastungen auf. Dieser obere Bereich des Druckluftbehälters weist daher im Stand der Technik ein Verstärkungsblech auf, um die erhöhten Belastungen aufnehmen zu können.

Ferner sind aus dem Stand der Technik bekannte Druckluftbehälter häufig zweistückig ausgebildet, wobei eine im wesentlichen zylinderförmige Umfangsseite aus relativ dünnwandigem Metall hergestellt ist, während z.B. die Stirnseite des Druckluftbehälters aus einem Metall mit einer größeren Wanddicke hergestellt ist. Die Umfangsseite und die Stirnseite werden zur Ausbildung eines topfförmigen Druckluftbehälters miteinander verschweißt. Zusätzlich kann die Stirnseite das o.g. Verstärkungsblech aufweisen.

Nachteilig an solchen Druckluftbehältern ist ihr hohes Gewicht. Ein weiterer Nachteil ist die komplexe Fertigung dieser Druckluftbehälter, da diese in mehreren Schritten zusammengesetzt und verschweißt werden müssen. Dies ist jedoch erforderlich, um nicht den gesamten Druckluftbehälter aus einem Metall mit einer großen Wanddicke herstellen zu müssen, was zu einem noch höheren Gewicht führen würde.

Aufgabe der Erfindung ist es, einen Druckluftbehälter zur Verwendung in einem Federbein eines Luftfederungssystems eines Fahrzeugs bereitzustellen, der ein geringeres Gewicht aufweist und dessen Herstellung vereinfacht ist.

Die Lösung der Aufgabe erfolgt erfindungsgemäß durch die Merkmale des Anspruchs 1.

Der erfindungsgemäße Druckluftbehälter ist für die Verwendung in einem Federbein eines Luftfederungsystems eines Fahrzeugs bestimmt und ist zur fluiddichten Aufnahme komprimierter Luft ausgebildet. Hierzu kann der Druckluftbehälter bspw. im Wesentlichen topfförmig ausgebildet sein. Jedoch kann der Druckluftbehälter auch andere Formen annehmen, wobei es wichtig ist, dass er ein gegenüber der Umgebung abgeschlossenes Innenvolumen aufweist. Erfindungsgemäß ist der Druckluftbehälter wenigstens teilweise und insbesondere vollständig aus faserverstärktem Kunststoff hergestellt.

Gegenüber Druckluftbehältern aus Metall bietet der erfindungsgemäße Druckluftbehälter den Vorteil eines wesentlich geringeren Gewichts. So weist bspw. das Metall eines aus dem Stand der Technik bekannten Druckluftbehälters eine Dichte von 7,85 Gramm/Kubikdezimeter auf, während der faserverstärkte Kunststoff des erfindungsgemäßen Druckluftbehälters eine Dichte von 1,25 Gramm/Kubikdezimeter aufweist.

Durch die erfindungsgemäße Verwendung von faserverstärktem Kunststoff zur Ausbildung des Druckluftbehälters kann ferner die Gestaltungsfreiheit des Konstrukteurs beim Entwurf des Druckluftbehälters erhöht werden. So ist es bspw. möglich verschiedene Teile des Druckluftbehälters mit unterschiedlichen Wanddicken auszubilden, sodass diese Bereiche optimal an die gestellten mechanischen Anforderungen angepasst werden können. So ist es möglich, einen Bereich des Druckluftbehälters, der besonders hohen mechanischen Belastungen ausgesetzt ist, dickwandiger auszubilden als andere Teile des Druckluftbehälters. Diese können dünnwandiger ausgebildet werden, wodurch eine Gewichtseinsparung möglich ist.

Bspw. ist es möglich, dass der Druckluftbehälter eine im Wesentlichen zylindrische Umfangsseite und eine mit dieser verbundene Stirnseite aufweist.

Die Stirnseite kann eine Aufnahmevorrichtung zur Aufnahme eines insbesondere oberen Endes eines Federbeins eines Fahrzeugs aufweisen.

Auch kann die Stirnseite des Druckluftbehälters eine Befestigungsvorrichtung zum Befestigen des Druckbehälters und insbesondere des hierin aufgenommenen Federbeins an einem Teil einer Fahrzeugkarosserie, z.B. einem Federbeinlager aufweisen.

Die Stirnseite des Druckluftbehälters, an der das Federbein aufgenommen ist und die ferner der mechanischen Verbindung des Federbeins mit dem Federbeinlager dient, ist den größten mechanischen Belastungen ausgesetzt. Daher ist es bevorzugt, dass die Stirnseite des Druckluftbehälters eine größere Wandstärke als andere Teile des Druckluftbehälters, insbesondere als seine Umfangsseite aufweist. Trotz der verschiedenen Wanddicken, die zur Ausbildung des erfindungsgemäßen Druckluftbehälters verwendet werden, bleibt seine Herstellung durch die Verwendung von faserverstärktem Kunststoff einfach. Dies wird dadurch erreicht, dass die Stirnseite des Druckluftbehälters bevorzugt einstückig mit seiner Umfangsseite aus faserverstärktem Kunststoff ausgebildet ist. Ein aufwendiges Verbinden der Einzelteile des Druckluftbehälters, wie es bspw. beim Verschweißen der Metallteile bei metallischen Druckluftbehältern notwendig ist, entfällt.

Weiterhin ist es durch die erfindungsgemäße Verwendung eines faserverstärktem Kunststoffs möglich, verschiedene Bereiche des Druckluftbehälters mit verschiedenartigen Fasern zu verstärken. So ist es bspw. möglich, Bereiche die besonders hohen mechanischen Belastungen ausgesetzt sind, aus einem mit gewobenen Fasern verstärkten Kunststoff auszubilden. Ein derartiges Fasergewebe verleiht diesem Bereich des Druckluftbehälters eine besonders große Stabilität.

Dagegen ist es ferner möglich, z.B. die Umfangsseite aus einem mit Kurzfasern und/oder Langfasern verstärkten Kunststoff auszubilden, da hier keine derart hohe mechanische Stabilität gefordert ist. Dennoch sind die Umfangseite und die Stirnseite des erfindungsgemäßen Druckluftbehälters auch in dieser Ausführungsform einstückig ausgebildet. Verfahren zum Herstellen von einstückigen Werkstücken aus Kunststoffen, die mit verschiedenen Faserarten verstärkt wurden, sind aus dem Stand der Technik bekannt und werden daher nicht weiter im Detail beschrieben. Wesentlich ist, dass das Endprodukt des Herstellungsprozesses ein Druckluftbehälter ist, dessen Einzelteile nicht mehr miteinander verbunden werden müssen.

Der faserverstärkte Kunststoff, aus dem der erfindungsgemäße Druckluftbehälter ausgebildet ist, kann bspw. ein glasfaserverstärkter Kunststoff oder ein kohlefaserverstärkter Kunststoff sein.

In einer bevorzugten Ausführungsform weist der Druckluftbehälter an seinem der Stirnseite gegenüberliegenden Ende ein ringförmiges Verbindungselement zum fluiddichten Verbinden des Druckluftbehälters mit einer Manschette auf. Durch diese Manschette wird das Innenvolumen des Druckluftbehälters fluiddicht von der Umgebung getrennt. Die Stelle, an der der Druckluftbehälter mit der Manschette verbunden ist, ist hohen mechanischen Belastungen ausgesetzt. Um eine dauerhafte Verbindung zu gewährleisten, weisen daher aus dem Stand der Technik bekannte Druckluftbehälter aus Metall an dieser Stelle einen Versteifungsring auf. Dieser kann beim erfindungsgemäßen Druckluftbehälter entfallen, da es möglich ist, das Verbindungselement dadurch auszubilden, das der Druckluftbehälter an seinem der Stirnseite gegenüberliegenden Ende eine ringförmige Verdickung seiner Wandstärke aufweist. Auch diese ringförmige Verdickung ist einstückig mit dem Rest des Druckluftbehälters, insbesondere mit seiner Umfangsseite und der gegenüberliegenden Stirnseite ausgebildet, sodass ein separates Verbinden dieser ringförmigen Verdickung mit dem Rest des Druckluftbehälters nach seiner Produktion entfällt. Alternativ kann ein ringförmiges Versteifungselement aus Metall, insbesondere aus Aluminium verwendet werden, das separat gedreht und gefräst wird.

Im Übrigen kann der erfindungsgemäße Druckluftbehälter neben den genannten Merkmalen weitere Merkmale aufweisen, die aus Druckluftbehältern aus dem Stand der Technik bekannt sind. Auf eine nähere Beschreibung dieser aus dem Stand der Technik bekannten Merkmale wird daher verzichtet.

Die Erfindung betrifft ferner ein Verfahren zur Herstellung eines Druckbehälters, beispielsweise eines Druckluftbehälters zur Verwendung in einem Federbein. Zur Herstellung eines Druckluftbehälters wird in einem ersten Schritt eine Faserverbundmatte erwärmt, wobei es sich bei den Fasern in bevorzugter Ausführungsform um Glasfasern handelt. Die erwärmte Matte, die insbesondere auf ca. 205 °C erwärmt wird, wird sodann in eine topfartige Außenform eingelegt. Hierbei kann das Erwärmen der Matte, zumindest sobald diese eine ausreichende Flexibilität erreicht hat, auch durch Erwärmen der Außenform erfolgen.

Anschließend wird in die Faserverbundmatte in einen die Stirnseite des Druckbehälters ausbildenden Bereich die Gewindehülse eingesetzt. Im nächsten Schritt wird eine Innenform in die Außenform eingeführt, wobei es unerheblich ist, ob die Innen- und/oder die Außenform bewegt wird. Relevant ist ein Schließen der beiden Formen, sodass zwischen den beiden Formen die Faserverbundmatte angeordnet ist. Ferner erfolgt ein Aushärten der Faserverbundmatte und Entnehmen des fertigen Druckluftbehälters. Das Entnehmen erfolgt üblicherweise durch Auswerfen mit Hilfe von Auswerferstiften.

Um die Gewindehülse in der Stirnseite des Druckbehälters eindeutig zu zentrieren, ist es bevorzugt, dass die Innenform einen Zentrierstift aufweist. Beim Zusammenführen der beiden Formen erfolgt über den Zentrierstift automatisch ein Zentrieren der Gewindehülse am Mittelpunkt der Stirnseite. Der Zentrierstift ist hierbei vorzugsweise federbelastet, sodass zunächst eine Zentrierung der Hülse gewährleistet ist, bevor die beiden Formen vollständig zusammengefahren werden.

Bei einer besonders bevorzugten erfindungsgemäßen Weiterbildung des Verfahrens wird beim Zusammenführen der Innenform und der Außenform Kunststoffmaterial in Einbuchtungen, insbesondere Sacklöcher der Gewindehülse eingedrückt. Hierdurch ist eine zuverlässiger formschlüssige Verbindung zwischen der Gewindehülse und der Stirnseite des Druckbehälters realisiert.

Das erfindungsgemäße Verfahren kann auch verwendet werden, um andere Druckbehälter herzustellen. Beispielsweise kann es zur Herstellung eines Druckluftzylinders für pneumatische Parkbremsen verwendet werden. Das erfindungsgemäße Verfahren eignet sich ferner zur Herstellung von Druckbehältern, die mit einem Flüssigkeitsdruck beaufschlagt werden und in die eine Gewindehülse eingebracht werden muss. Hierbei kann es sich beispielsweise um die Ölwanne eines Kraftfahrzeugs handeln, die im laufenden Betrieb mit einem Öldruck beaufschlagt wird, der über dem Atmosphärendruck liegt. Generell wird unter einem Druckbehälter jeder Behälter verstanden, der dazu geeignet ist, mit einem Druck beaufschlagt zu werden, der über dem Atmosphärendruck liegt. Eine Gewindehülse, die in eine Ölwanne eingebracht wird, kann z. B. einen Außendurchmesser von 22 mm aufweisen, während der Außendurchmesser eine Gewindehülse bei Druckbehältern für Luftfederungssysteme bei 45 - 50 mm liegen kann. Somit kann die Gewindehülse, die im Rahmen des erfindungsgemäßen Verfahrens eingesetzt wird, einen Durchmesser zwischen 20 und 50 mm aufweisen.

Im Folgenden werden bevorzugte Ausführungsformen der Erfindung anhand von Figuren erläutert.

Es zeigen:
- Figur 1: eine schematische Ansicht einer Ausführungsform eines erfindungsgemäßen Druckluftbehälters und
- Figur 2: eine schematische Schnittansicht einer Vorrichtung zur Herstellung eines Druckbehälters.

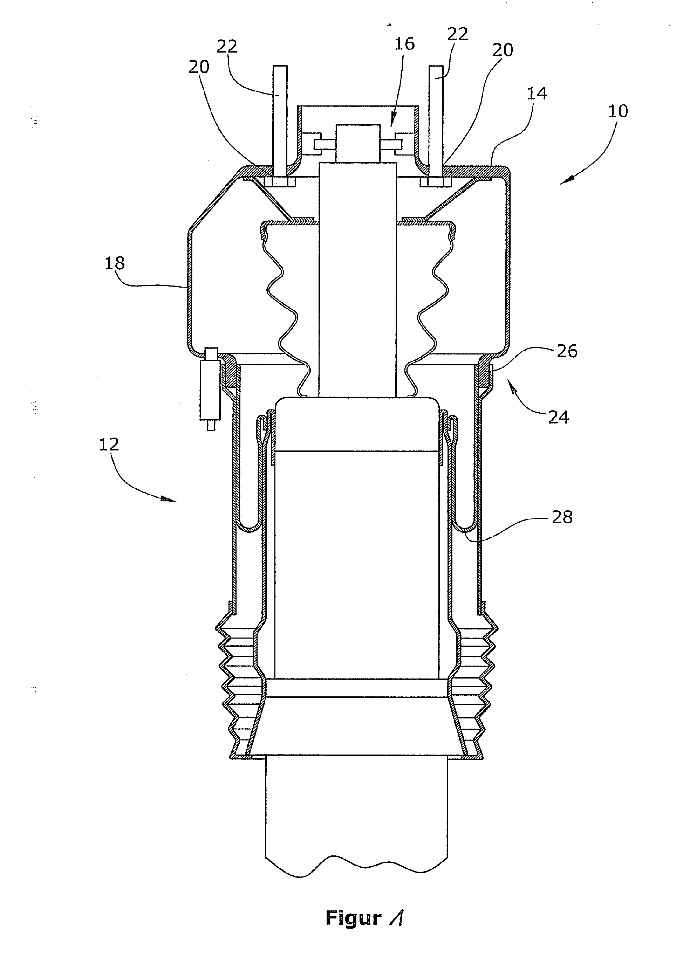

Gemäß der Fig 1 ist der Druckluftbehälter 10 am oberen Ende eines Federbeins 12 angeordnet. An seinem oberen Ende weist der Druckluftbehälter 10 eine Aufnahmevorrichtung 16 zur Aufnahme des oberen Endes des Federbeins 12 auf. Diese Aufnahmevorrichtung kann an der Stirnseite 14 des Druckluftbehälters 10 oder von dieser Stirnseite 14 in Richtung des Inneren des Druckluftbehälters 10 versetzt angeordnet sein.

An der Stirnseite 14 weist der Druckluftbehälter 10 ferner mindestens eine Befestigungsvorrichtung 20 zum Befestigen des Druckluftbehälters 10 und des hierin aufgenommenen Federbeins 12 an einem Federbeinlager auf. Die Befestigungsvorrichtung kann bspw. dadurch ausgebildet sein, dass der Druckluftbehälter Bohrungen zur Aufnahme von Bolzen 22 aufweist, durch die der Druckluftbehälter und das Federbein mit dem Federbeinlager verbunden werden können.

Wie in der Figur 1 sichtbar weist die Stirnseite 14 des Druckluftbehälters 10 eine größere Wanddicke als seine Umfangsseite 18 auf.

An seinem unteren, d.h. der Stirnseite 14 gegenüberliegendem Ende 24 weist der Druckluftbehälter 10 eine ringförmige Materialverdickung 26 auf, durch die ein Verbindungselement ausgebildet ist. Dieses Verbindungselement dient dem mechanischen Verbinden des Druckluftbehälters 10 mit der Manschette 28, durch die das Innenvolumen des Druckluftbehälters 10 fluiddicht von der Umgebung getrennt wird.

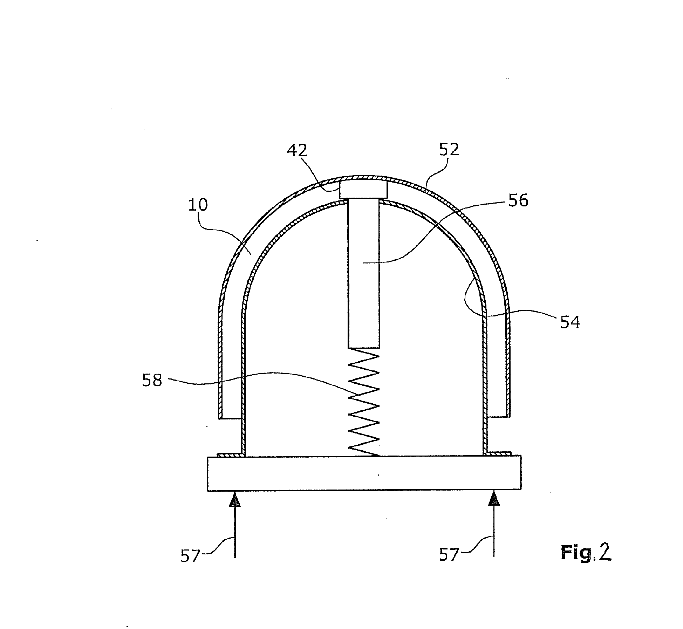

Gemäß dem erfindungsgemäßen Verfahren wird zunächst eine Faserverbundmatte erwärmt und die erwärmte Faserverbundmatte sodann in eine Außenform 52 (Figur 2) eingelegt. Hierbei kann ein vollständiges Erwärmen der Matte auch durch Erwärmen der Außenform 52 erfolgen. Im nächsten Schritt wird die Gewindehülse 42 in den Bereich der Fasermatte eingesetzt, der später die Stirnseite 28 des Druckbehälters 10 bildet. Im nächsten Schritt wird eine Innenhülse 54 in Richtung der Pfeile 57 mit Hilfe eines nicht näher dargestellten Mechanismus in die Innenform 54 eingeführt. Hierbei wird vor dem vollständigen Schließen der Form ein Zentrierstift 56 in die Gewindehülse 42 eingeführt und zentriert diese. Ebenso ist es möglich die Gewindehülse 42 vor dem Einführen der Innenform 54 auf dem Zentrierstift 56 anzuordnen und die Innenform 54 sodann zusammen mit der Gewindehülse 42 in die Außenform 52 einzuführen. Sobald die Gewindehülse 42 in ihrer Endposition angeordnet und die beiden Formen 52,54 vollständig miteinander verschlossen sind, ist der Zentrierstift gegen die Kraft einer Feder 58 zurückgedrückt. Die Feder 58 unterstützt zusätzlich das Öffnen der Form nach erfolgter Aushärtung des Faserverbundmaterials, wobei hierzu zusätzlich Auswerfer vorgesehen sind.

## Patentansprüche

1. Druckluftbehälter (10) zur Verwendung in einem Federbein (12) eines Luftfederungssystems eines Fahrzeugs,
wobei der Druckluftbehälter (10) zur fluiddichten Aufnahme komprimierter Luft ausgebildet ist,
**dadurch gekennzeichnet, dass**
der Druckluftbehälter (10) wenigstens teilweise aus faserverstärktem Kunststoff ausgebildet ist.

2. Druckluftbehälter (10) nach Anspruch 1, **dadurch gekennzeichnet, dass** der Druckluftbehälter (10) eine im Wesentlichen zylindrische Umfangsseite (18) und einer mit dieser verbundene Stirnseite (14) aufweist.

3. Druckluftbehälter (10) nach Anspruch 2, **dadurch gekennzeichnet, dass** an der Stirnseite (14) eine Aufnahmevorrichtung (16) zur Aufnahme eines insbesondere oberen Endes eines Federbeins (12) eines Fahrzeugs ausgebildet ist.

4. Druckluftbehälter (10) nach Anspruch 2 oder 3, **dadurch gekennzeichnet, dass**, an der Stirnseite (14) eine Befestigungsvorrichtung (20) zum Befestigen des Druckbehälters (10) und insbesondere des hierin aufgenommenen Federbeins (12) an einem Teil einer Fahrzeugkarosserie, insbesondere an einem Federbeinlager ausgebildet ist.

5. Druckluftbehälter (10) nach einem der Ansprüche 2 bis 4, **dadurch gekennzeichnet, dass** die Stirnseite (14) des Druckluftbehälters (10) eine größere Wandstärke als andere Teile des Druckluftbehälters (10), insbesondere als eine Umfangsseite (18) aufweist, wobei die Stirnseite (14) des Druckluftbehälters (10) einstückig mit seiner Umfangsseite (18) aus faserverstärktem Kunststoff ausgebildet ist.

6. Druckluftbehälter (10) nach einem der Ansprüche 2 bis 5, **dadurch gekennzeichnet, dass** die Stirnseite (14) aus einem mit gewobenen Fasern verstärkten Kunststoff ausgebildet ist.

7. Druckluftbehälter (10) nach Anspruch 6, **dadurch gekennzeichnet, dass** die Umfangsseite (18) aus einem mit Kurzfasern und/oder Langfasern verstärkten Kunststoff ausgebildet ist.

8. Druckluftbehälter (10) nach einem der Ansprüche 1 bis 7, **dadurch gekennzeichnet, dass** der faserverstärkte Kunststoff ein glasfaserverstärkter Kunststoff oder ein kohlefaserverstärkter Kunststoff ist.

9. Druckluftbehälter (10) nach einem der Ansprüche 2 bis 8, **dadurch gekennzeichnet, dass** der Druckluftbehälter (10) an seinem der Stirnseite (14) gegenüberliegenden Ende (24) ein ringförmiges Verbindungselement (26) zum fluiddichten Verbinden des Druckluftbehälters (10) mit einer Manschette (28) aufweist, durch die das Innenvolumen des Druckluftbehälters (10) fluiddicht von der Umgebung getrennt wird, wobei das ringförmige Verbindungselement (26) dadurch ausgebildet ist, dass der Druckluftbehälter (10) an seinem der Stirnseite (14) gegenüberliegenden Ende (24) eine ringförmige Verdickung (26) seiner Wandstärke aufweist.

10. Verfahren zur Herstellung eines Druckbehälters, insbesondere eines Druckluftzylinders für pneumatische Parkbremsen oder eines Druckluftbehälters nach einem der Ansprüche 1 bis 9 mit den Schritten:
Erwärmen einer Faserverbundmatte,
Einlegen der Faserverbundmatte in eine topfförmige Außenform (52),
Einsetzen einer Gewindehülse (42) in einen eine Stirnseite des Druckbehälters ausbildenden Bereich der Faserverbundmatte,
Einführen einer Innenform (54) in die Außenform (52), sodass die Faserverbundmatte zwischen beiden Formen angeordnet ist,
Aushärten der Faserverbundmatte und
Entnehmen des fertigen Druckbehälters (10).

11. Verfahren nach Anspruch 10, wobei die Innenform (54) einen insbesondere federbelasteten Zentrierstift (56) zur Zentrierung der Gewindehülse (42) in der Stirnseite (28) aufweist.

12. Verfahren nach Anspruch 10 oder 11, **gekennzeichnet dadurch, dass** beim Einführen der Innenform (54) in die Außenform (52) Kunststoffmaterial in Einbuchtungen (44), insbesondere Sacklöcher (44) der Gewindehülse (42) zur formschlüssigen Verbindung eingepresst wird.
